# EUROPÄISCHE PATENTSCHRIFT

(11) **EP 0 437 638 B1**
(45) Veröffentlichungstag und Bekanntmachung des Hinweises auf die Patenterteilung: **22.06.1994**
(21) Anmeldenummer: 89124045.9
(22) Anmeldetag: 28.12.1989
(51) Int. Cl.: B23B 31/40

(54) **Mitnahmeelement für Zentrierspann- oder Spannvorrichtungen**
Driving element for centering and clamping devices
Elément d'entraînement pour dispositifs de centrage et de serrage

(43) Veröffentlichungstag der Anmeldung: 24.07.1991
(73) Patentinhaber: Kohlert, Rudolf, D-63811 Stockstadt (DE); Fischer, David, D-63743 Aschaffenburg (DE)
(72) Erfinder: Kohlert, Rudolf, D-63811 Stockstadt (DE); Fischer, David, D-63743 Aschaffenburg (DE)
(74) Vertreter: Bischof, Hans-Jochen, Dipl.-Ing.

(56) Entgegenhaltungen:
- EP-A- 0 096 285
- DE-A- 3 045 536
- GB-A- 159 405
- GB-A- 2 178 984
- US-A- 4 469 288

## Beschreibung

Die Erfindung bezieht sich auf eine Zetrierspann- oder Spannvorrichtung mit einem Mitnahmeelement, das sich an einer abgeschrägten Fläche eines geführten Spannschiebers und an einer daran direkt anliegenden abgeschrägten Fläche eines den Spannschieber antreibenden Kolbens bzw. Stößels befindet.

In vielen Zentrierspann- oderSpannvorrichtungen befinden sich bewegungsumlenkende, keilförmig abgeschrägte Reibflächen. Sie sitzen an meist mehreren Spannschiebern und an einem Kolben bzw. Stößel, der die Spannbewegung auf den Spannschieber einleitet. Insofern Spannbewegung in einer Richtung ausreicht, wird die entgegengesetzte Rückzugbewegung von Mitnahmeelementen übertragen.

So ist aus der DE 30 45 536 bekannt, zwischen der abgeschrägten Reibfläche eines geführten Spannschiebers und an der direkt anliegenden abgeschrägten Reibfläche eines den Spannschieber antreibenden Kolbens eine Mitnahme dadurch zu erzielen, daß auf der einen genannten Reibfläche eine Nut ( T-förmig bzw. schwalbenschwanzförmig ) in Richtung der Verschiebung zwischen Spannschieber und Kolben eingebracht ist und daß auf der anderen Reibfläche fest mit dieser verbunden ein hervorspringendes Zahnstück angeordnet ist, das in die Nut eingreift und damit den Gegenquerschnitt der Nut besitzt.

Dieses bedingt, daß mit feinen Fräsern geringen Vorschubs und in mehreren Gängen sehr genau gearbeitet werden muß und daß relativ weit in die Tiefe eingegriffen wird. Letzteres wirkt sich besonders ungünstig bei Vorrichtungen geringer Abmessungen aus, wie sie z.B. benötigt werden, um kleinere Bohrungen einzufahren.

Die Aufgabe der vorliegenden Erfindung besteht somit darin eine Mitnahme zwischen Spannschieber und Spannkolben zu schaffen, die in kleinsten Abmessungen wirksam ist und die ein schnelles Lösen der Verbindung gestattet und aus Elementen besteht, die einfach herstellbar sind und die bei der Kraftübertragung nahezu spielfrei arbeitet

Die aufgabe wird durch die in den Ansprüchen enthaltenen Merkmale gelöst. Der Vorteil der erfindungsgemäß vorgeschlagenen Lösung besteht in der güstigeren Herstellung, im baukasteartigen Aufbau und der leichten Auswechselbarkeit der Teile. Das Mitnahmeelement basiert auf der Verwendung fertiger bzw. einfach herstellbarer Strangprofile. Da in den Reibflächen jeweils nur Bohrungen eingebracht werden müßen, ist die Herstellung der Elemente kostengünstig und mit relativ großen Toleranzen ohne Sonderwerkzeuge möglich, ohne daß dadurch die Funktionstüchtigkeit beeinträchtigt wird.

Die Reibflächen können im Verhältnis groß gehalten werden, da sie jeweils nur von schmalen Längsschlitzen mittig unterbrochen sind. Durch einen starken seitlichen Pendelausgleichseffekt, den die Elemente durch die Beweglichkeit der zylindrischen Körper in den Bohrungen erzielen, wird die benötigte Führungslänge der Spannschieber in der Vorrichtung verkürzt. Diese Art der Elemente erträgt ein Maximum an Verschmutzung, baulichen Toleranzen, Seitendrücken etc. Die im Kolben befindlichen Bohrungen können gleichzeitig als Fettkanäle angelegt werden, die dann die Verbindung zwischen zwei Fetträumen bilden.

So wird bei jedem Spannvorgang Fett an den Mitnahmeelementen vorbei gepumpt, z.B. vom oberen Kolbenraum in einen unteren Raum, der an einer Einschnürungsstelle des Kolbens besteht. Hoher Wirkungsgrad und lange Lebensdauer sind die Folge.

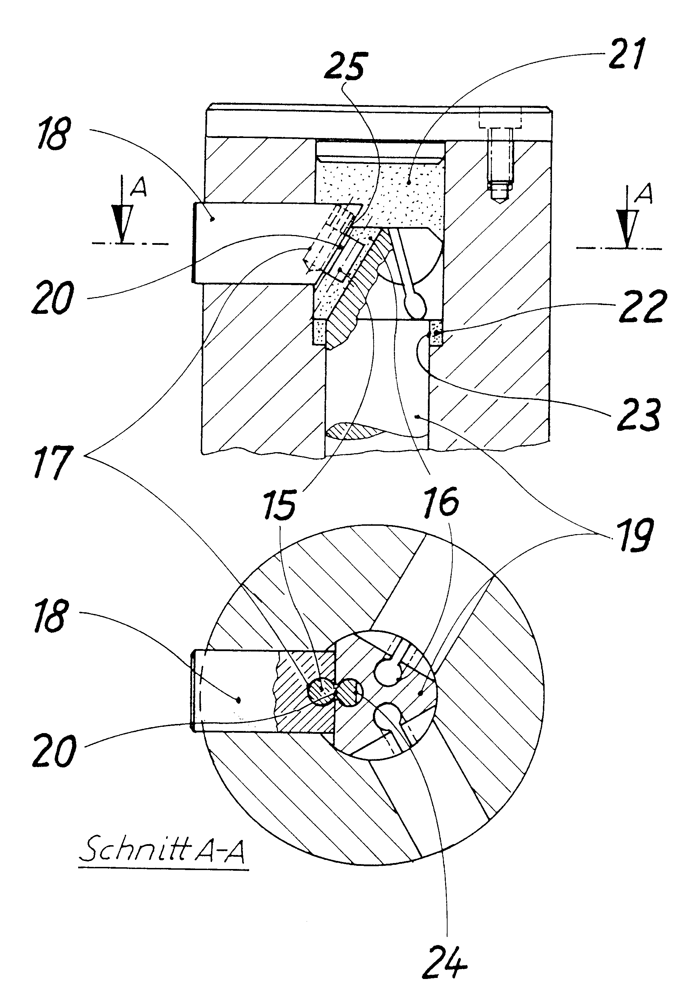

In der Zeichnung ist die Ausführung näher erleutert.

Die Figur zeigt eine Seitenansicht und einen von oben betrachteten Querschnitt.

Das Mitnahmeelement 15 wird von einem gesonderten Teil mit "Achterquerschnitt" gebildet und aus zwei je in Spannschieber 18 und Kolben 19 eingebrachten Bohrungen 16;17 eingeführt. Zweckmässig wird das Mitnahmeelement 15 aus dem Abschnitt eines Profilstranges hergestellt. Der Zwischensteg 20 erhöht hierbei die Pendelausgleichsfähigkeit des Elementes. Die Bohrungen 16;17 verlaufen parallel zu ihren abgeschrägten Flächen und weisen je einen Längsschlitz auf zur Einführung des Mitnahmeelementes 15.

Die Zwangsschmierung besteht aus dem oberen Fettraum 21 und einem unteren Fettraum 22 und wirkt insbesondere an der Einschnürungsstelle 23 des Kolbens.

Der untere Fettraum 22 ist in seiner Größe so ausgelegt, das daß Volumen des gesamten Fettbereiches bei jeder Stellung von Kolben 19 und Spannschieber 18 annähernd gleich bleibt.

Eine Abflachung 24 des teiles 15 erzeugt eine Verbindung - und damit einen Fettkanal - zwischen dem oberen 21 und dem unteren 22 Fettraum.

## Patentansprüche

1. Zentrierspann- oder Spannvorrichtung mit einem Mitnahmeelement, das sich an einer abgeschrägten Reibfläche eines geführten Spannschiebers und an einer daran direkt anliegenden abgeschrägten Reibfläche eines den Spannschieber antreibenden Kolbens bzw. Stößels befindet, ***dadurch gekennzeichnet,*** daß das Mitnahmeelement einen "Achterquerschnitt" aufweist derart, daß es aus zwei zylindrischen Formen besteht, die parallel liegend miteinander verbunden sind und als Verbindungsteil (15) zwischen Spannschieber (18) und Kolben bzw, Stößel (19) wirkt, daß in dem Spannschieber (18) und in dem Kolben (19) im Bereich ihrer abgeschrägten Flächen (25) parallel zur Fläche (25), also in der Richtung, in der sich Spannschieber (18) und Kolben bzw. Stößel (19) beim Spannen gegeneinander verschieben, Bohrungen (16,17) eingebracht sind, die je einen Längsschlitz aufweisen, so daß sie jeweils einen der zylindrischen Formen des Verbindungsteiles (15) umgreifen, derart, daß dieses längsverschiebbar ist.

2. Zentrierspannvorrichtung nach Anspruch 1 und 2, ***dadurch gekennzeichnet,*** daß das Element (15) aus einem Profilstrang besteht, der zwischen den beiden zylindrischen Körpern einen Steg (20) besitzt.

3. Zentrierspannvorrichtung nach Anspruch 1, ***dadurch gekennzeichnet,*** daß die Bohrungen (16;17) etwa mittig in den jeweiligen Reibflächen angeordnet sind.

4. Zentrierspannvorrichtung nach Anspruch 1 bis 4, ***dadurch gekennzeichnet,*** daß die in den Bohrungen (16;17) der Reibflächen (25) des Kolbens bzw. Stößels befindlichen oder eingreifenden Elemente (15) in Längsrichtung eine Abflachung (24) aufweisen, die den Fettkanal einer Zwangsschmierung ergibt, und zwar zwischen einem oberen Fettraum (21) und einem unteren Fettraum (22).

## Claims

1. Centring and clamping or clamping device comprising a driving element provided on a bevelled friction surface of a guided clamping slide and on an immediately adjacent bevelled friction surface of a piston or ram, respectively, which drives said clamping slide, *characterized in* that said driving element presents a "cross-sectional area in the form of the figure eight" such that it is composed of two cylindrical forms which are interconnected in a parallel relationship, and acts as a connecting element (15) between said clamping slide (18) and said piston or ram (19), respectively; in that bores (16, 17) are provided in said clamping slide (18) and in said piston (19) in the area of their bevelled surfaces (25) parallel to the surface (25), which means in the direction of the relative displacement of said clamping slide (18) and said piston or ram (19), respectively, in the clamping operation which bores present each a longitudinal slot so that they surround one of said cylindrical forms of said connecting element (15), respectively, so as to allow for a longitudinal displacement thereof.

2. Centring and clamping device according to Claim 1, *characterized in* that said element (15) consists of a sectional bar having a rib (20) between said two cylindrical bodies.

3. Centring and clamping device according to Claim 1, *characterized in* that said bores (16; 17) are provided approximately centrally on the respective frictional surfaces.

4. Centring and clamping device according to Claims 1 to 3, *characterized in* that the elements (15) provided or engaging in said bores (16; 17) of the frictional surfaces (25) of said piston or ram, respectively, present a flattened portion (24) in the longitudinal direction, which provides the greasing flute of a forced-lubrication system, specifically between an upper grease volume (21) and a lower grease volume (22).

## Revendications

1. Dispositif de serrage à centrage ou de centrage, comprenant un élément d'entraînement disposé à une surface frottante biseautée d'une coulisse de serrage guidée, à une surface frottante biseautée directement adjacente, d'un piston ou respectivement coulisseau à entraîner ladite coulisse de serrage, *caractérisé en ce* que ledit élément d'entraînement présente une "coupe transversale en 8" de façon qu'il est composé de deux formes cylindriques reliées l'une à l'autre en parallèle, et qu'il a la fonction d'un élément de raccord (15) entre ladite coulisse de serrage (18) et ledit piston ou respectivement coulisseau (19); en ce que des alésages (16, 17) sont formés dans ladite coulisse de serrage (18) et dans ledit piston (19) dans la zone de leurs surfaces biseautées (25) en parallèle à la surface (25), c.-à.-d. en sens du déplacement relatif de ladite coulisse de serrage (18) et ledit piston ou respectivement coulisseau (19), en opération de serrage, lesquels alésages présentent chacun une rainure longitudinal de façon à enfermer respectivement une desdites formes dudit élément de raccord (15) afin de permettre un déplacement longitudinal du dernier.

2. Di spositif de serrage à centrage selon la revendication 1, *caractérisé en ce* que ledit élément (15) est formé par un tronçon profilé à une traverse (20) entre lesdits deux corps cylindriques.

3. Dispositif de serrage à centrage selon la revendication 1, *caractérisé en ce* que lesdits alésages (16; 17) sont formés au centre environ desdits surfaces frottantes respectives.

4. Dispositif de serrage à centrage selon les revendications 1 à 3, *caractérisé en ce* que lesdits éléments (15) disposés dans ou en prise avec lesdits alésages (16; 17) desdites surfaces frottantes (25) dudit piston ou respectivement coulisseau présentent une partie aplatie (24) en sens longitudinal, qui forme le passage graisseur d'un système de graissage forcé, en particulier entre un réservoir de graisse supérieur (21) et un réservoir de graisse inférieur (22).
